# EUROPEAN PATENT APPLICATION

(11) **EP 3 901 596 A1**
(43) Date of publication of application: **27.10.2021**
(21) Application number: 19899284.4
(22) Date of filing: 19.11.2019
(51) Int. Cl.: G01J 3/20, G01J 3/36, H01L 31/00, G01N 21/27, G02B 5/18

(54) **SPECTROPHOTOMETER, SPECTROSCOPIC ANALYZER, AND METHOD FOR MANUFACTURING SPECTROPHOTOMETER**

(30) Priority: 20.12.2018 JP 2018238749
(71) Applicant: Hitachi High-Tech Corporation, Minato-ku Tokyo 105-6409 (JP)
(72) Inventor: YAEGASHI Kenta, Tokyo 105-6409 (JP); EBATA, Yoshisada, Tokyo 105-6409 (JP); AONO, Takanori, Tokyo 105-6409 (JP)
(74) Representative: Strehl Schübel-Hopf & Partner
(86) International application number: PCT/JP2019/045207
(87) International publication number: WO 2020/129519

(57) **Abstract**

A spectrophotometer 300 includes a white light source 212, condenser lenses 242a, 242b that collect light emitted from the white light source 212, a slit 245 that diffracts the light collected by the condenser lenses 242a, 242b, a concave diffraction grating 246 that splits the light having passed through the slit 245, and a multi-wavelength detector 248 having a plurality of photodetection elements 304 that detect the light split by the concave diffraction grating 246, and each of the plurality of photodetection elements 304 included in the multi-wavelength detector 248 is arranged at an image position of the concave diffraction grating 246.

## Description

### Technical Field

The present invention relates to a spectrophotometer preferably installed in a spectrometer such as an automatic analyzer, a method of manufacturing the same, and the spectrometer.

### Background Art

As an example of a spectrophotometer that is high-performance, capable of highly stable measurement, highly reliable, and inexpensive, while maintaining high position accuracy between optical components and its small size, there is described a spectrophotometer including an optical waveguide, a light incidence slit for inputting incident light into the optical waveguide, a diffraction grating for splitting the incident light inputted into the optical waveguide, and a photodiode array for detecting the incident light split by the diffraction grating, where the spectrophotometer is constituted by forming the optical waveguide, the light incidence slit, and the diffraction grating integrally with an optical waveguide substrate and mounting a photoelectric conversion element substrate including the photodiode array formed thereon on the mounting unit provided on the optical waveguide substrate.

### Citation List

### Patent Literature

Patent Literature 1: Japanese Unexamined Patent Application Publication No. 2004-309146

### Non-Patent Literature

Non-Patent Literature 1: Kudo Keiei, "Basics and Methods of Spectroscopy," Ohmsha, Ltd., July 1985

### Summary of Invention

### Technical Problem

The automatic analyzer is a device that performs an examination such as analysis of components or detection of microorganisms in a collected sample, which is widely used in hospital examination rooms and examination centers.

In these years, needs are increasing for reduction in sample volume in a biochemical automatic analyzer for reasons such as mitigation of a patient's burden and reduction of running cost. As a technology to satisfy the needs, it is desired to measure weak light with high accuracy.

A photometric mechanism provided to the spectrometer is provided mainly with a white light source, a condenser lens, a slit, a concave diffraction grating, and a multi-wavelength detector.

Such a photometric mechanism collects light from the white light source using the condenser lens to irradiate a sample in a reaction vessel, and collects the light transmitting through the sample on an opening of a slit using the condenser lens. The light having passed through the slit is wavelength-dispersed by a concave diffraction grating to form a spectrum. The formed spectrum is then detected by a multi-wavelength detector.

A known general technology uses a detector that includes a plurality of photodetection elements arranged linearly as the multi-wavelength detector.

Here, an image position of the concave diffraction grating is determined by a radius of curvature of a curved substrate of the multi-wavelength detector and a period of engraved grooves.

In the following, a currently used concave diffraction grating having regular groove periods is described.

A general concave diffraction grating is engraved with the grooves so that the engraved groove periods are all regular with respect to the chord of the curved substrate.

In a case of using the concave diffraction grating for the purpose of spectroscopy, it is customary to project divergent light from a special location to the concave diffraction grating.

As a special case, it is known that, when a slit is provided on a Rowland circle having a diameter equal to a radius of curvature of the concave diffraction grating and divergent light is projected thereon, an image point is also located on the Rowland circle (Non-Patent Literature 1).

With the currently used multi-wavelength detector, when the diffraction grating is not rotated, the image points are located on an arc forming a Rowland circle, whereas it is not possible to detect light because the photodetection elements are linearly arranged, and not possible to use the concave diffraction grating having regular groove periods.

Moreover, to reduce an effect by an aberration, a concave diffraction having irregular groove periods is also used. Such a concave diffraction grating is used mainly for the automatic analyzer.

In the concave diffraction grating having irregular groove periods, the grooves are engraved to have different periods with respect to the chord of the curved substrate.

In the concave diffraction grating having irregular groove periods of engraved grooves, the slit is disposed on the Rowland circle having the diameter equal to the radius of curvature of the concave diffraction grating. Therefore, when projecting the divergent light, the image point is positioned on a lemniscate (lemniscate) passing through the center of curvature of the concave diffraction grating and it is theoretically not possible to arrange the image position of respective wavelength perfectly in a straight line.

Even when using such a concave diffraction grating, because the only wavelength usable for measurement without being affected by the aberration is at an intersecting point with the straight line, performance such as a diffraction efficiency and a wavelength resolution lowers depending on the wavelength, which imposes a constraint on the photometric wavelength.

Patent Literature 1 discloses a spectrophotometer that uses a concave diffraction grating. With regard to this technology, there is described a method in which photodiodes used for the measurement are attached on a substrate surface formed in a curved plane and arranged on the Rowland circle with light receiving surfaces of the photodiodes being mounted on the substrate.

However, in the spectrophotometer described in Patent Literature 1 described above, the light receiving surfaces of the photodiodes are located on the circle. Nevertheless, the light receiving elements are not always arranged on the image position, which limits the detection efficiency. Moreover, using a concave diffraction grating having irregular periods of the grooves presents a problem that it is not possible to perfectly align the image position with the detector position, which also limits the detection efficiency.

The present invention is made to solve the above-described problems, aiming to provide a spectrophotometer, a spectrometer, and a method of manufacturing the spectrophotometer capable of reducing an effect by an aberration of a concave diffraction grating regardless of the type of the concave diffraction grating.

### Solution to Problem

The present invention includes a plurality of means for solving the above-described problems. One example thereof is a spectrophotometer including a light source, a condenser lens that collects light emitted from the light source, a slit that diffracts the light collected by the condenser lens, a concave diffraction grating that splits the light passing through the slit, and a multi-wavelength detector having a plurality of photodetection elements that detect the light split by the concave diffraction grating, characterized in that each of the plurality of photodetection elements included in the multi-wavelength detector is arranged at the image position of the concave diffraction grating.

### Advantageous Effects of Invention

The present invention makes it possible to reduce an effect by an aberration of a concave diffraction grating regardless of the type of the concave diffraction grating. Problems, configurations, and effects other than those described above will become apparent from the following description of embodiments.

### Brief Description of Drawings

Fig. 1 is an overall configuration diagram of an automatic analyzer using a spectrophotometer according to First Embodiment of the present invention;
Fig. 2 presents an example of the spectrophotometer used in the automatic analyzer according to First Embodiment;
Fig. 3 presents an overview of the related art spectrophotometer;
Fig. 4 presents the related art multi-wavelength detector;
Fig. 5 is a cross-sectional view of a concave diffraction grating having regular groove periods;
Fig. 6 presents an image position of the concave diffraction grating having regular groove periods;
Fig. 7 is a cross-sectional view of a concave diffraction grating having irregular groove periods;
Fig. 8 presents the image position of the concave diffraction grating having irregular groove periods;
Fig. 9 presents an example of a method of manufacturing the multi-wavelength detector in the spectrophotometer according to First Embodiment;
Fig. 10 presents an example of the method of manufacturing the multi-wavelength detector in the spectrophotometer according to First Embodiment;
Fig. 11 presents an example of the method of manufacturing the multi-wavelength detector in the spectrophotometer according to First Embodiment;
Fig. 12 presents an example of the method of manufacturing the multi-wavelength detector in the spectrophotometer according to First Embodiment;
Fig. 13 presents an example of the method of manufacturing the multi-wavelength detector in the spectrophotometer according to First Embodiment;
Fig. 14 presents an example of the method of manufacturing the multi-wavelength detector in the spectrophotometer according to Second Embodiment of the present invention;
Fig. 15 presents an example of the method of manufacturing the multi-wavelength detector in the spectrophotometer according to Second Embodiment;
Fig. 16 presents an example of the method of manufacturing the multi-wavelength detector in the spectrophotometer according to Second Embodiment;
Fig. 17 presents an example of the method of manufacturing the multi-wavelength detector in the spectrophotometer according to Second Embodiment;
Fig. 18 presents an example of the method of manufacturing the multi-wavelength detector in the spectrophotometer according to Second Embodiment;
Fig. 19 presents an example of the spectrophotometer used in the automatic analyzer according to Third Embodiment of the present invention;
Fig. 20 presents an example of the method of manufacturing the multi-wavelength detector in the spectrophotometer according to Third Embodiment;
Fig. 21 presents an example of the method of manufacturing the multi-wavelength detector in the spectrophotometer according to Third Embodiment;
Fig. 22 presents an example of the method of manufacturing the multi-wavelength detector in the spectrophotometer according to Third Embodiment;
Fig. 23 presents an example of the method of manufacturing the multi-wavelength detector in the spectrophotometer according to Third Embodiment; and
Fig. 24 presents an example of the method of manufacturing the multi-wavelength detector in the spectrophotometer according to Third Embodiment.

### Description of Embodiments

In the following, embodiments of a spectrophotometer, a spectrometer, and a method of manufacturing the spectrophotometer according to the present invention are described with reference to drawings.

### <First Embodiment>

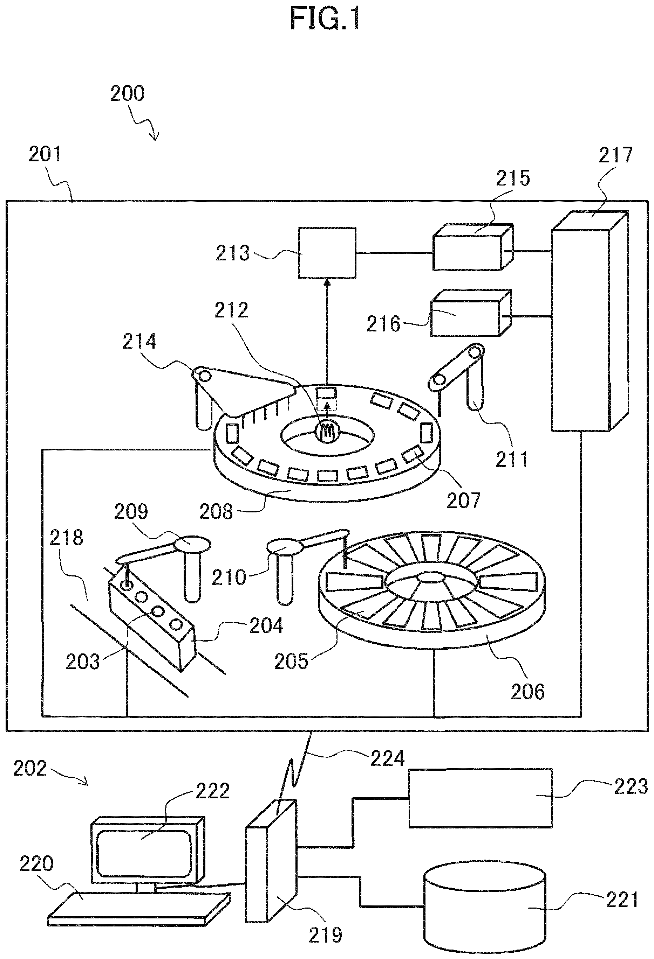

First Embodiment of a spectrophotometer, a spectrometer, and a method of manufacturing the spectrophotometer according to the present invention is described with reference to Figs. 1 to 13.

First, an overview of the automatic analyzer is described with reference to Fig. 1 as an example of the spectrometer in which the spectrophotometer of the present invention is preferably used. Fig. 1 is an overall configuration diagram illustrating an example of the automatic analyzer using the spectrophotometer.

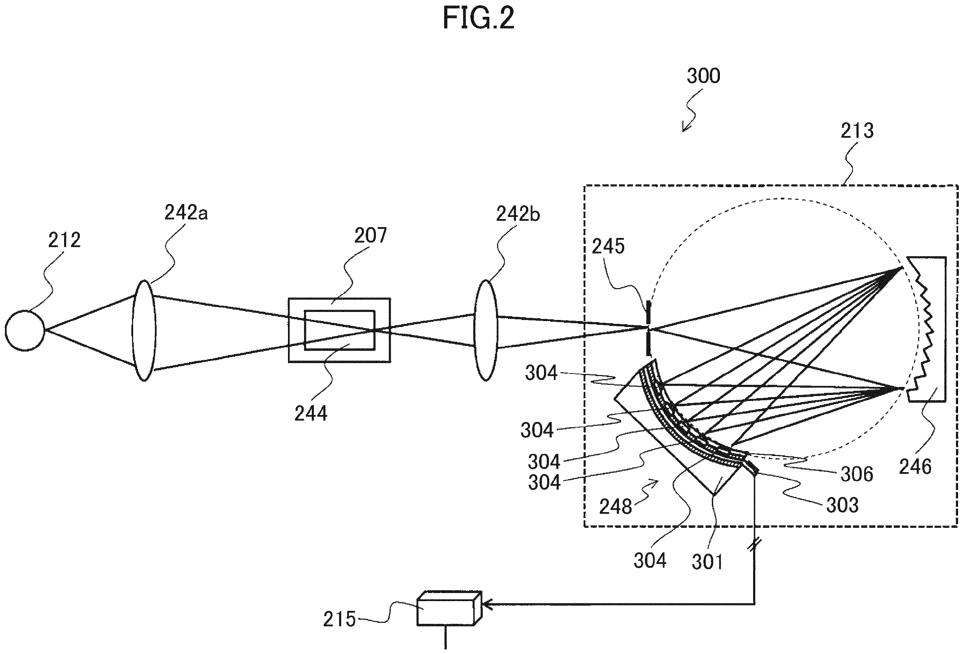

In Fig. 1, an automatic analyzer 200 according to the present First Embodiment is a device that analyzes reaction liquid 244 (see Fig. 2) including a sample and reagent mixed and reacted therein and includes an analysis unit 201 and an operation unit 202.

The analysis unit 201 is a portion that adds the reagent or the like to the sample to be analyzed (for example, a biological sample such as blood or urine) and measures its physical property (such as an absorbance).

The analysis unit 201 includes a rack transfer unit 218, a reagent disc 206, a reaction disc 208, a sample dispensing probe 209, a reagent dispensing probe 210, a stirring device 211, a white light source 212, a spectroscopic detection system 213, an A/D converter 215, a cleaning device 214, and a computer 216. Each of the above-mentioned components in the analysis unit 201 is connected to the computer 216 via an internal interface 217.

The rack transfer unit 218 is an equipment for transferring a rack 204 that stores therein one or more sample vessels 203 containing the sample to an intended dispensing position or standby position, and includes, for example, a belt and its drive unit.

The reagent disc 206 is a storage that stores therein a plurality of reagent bottles 205 containing the reagent to be added to the sample to be analyzed. The reagent disc 206 is typically configured to keep the reagent bottles 205 cold.

The reaction disc 208 is a discoidal equipment that stores therein a plurality of reaction vessels 207 containing the reaction liquid 244 including the sample to be analyzed with the reagent added thereto.

The sample dispensing probe 209 is an equipment that dispenses the sample contained in the sample vessel 203 to a predetermined reaction vessel 207.

The reagent dispensing probe 210 is an equipment that dispenses the reagent contained in the reagent bottle 205 to a predetermined reaction vessel 207.

The stirring device 211 is an equipment that stirs the reaction liquid 244 contained in the reaction vessel 207.

The white light source 212 is an equipment that irradiates the reaction liquid 244 contained in the reaction vessel 207 with a light flux, and the spectroscopic detection system 213 is an equipment that detects the light emitted from the white light source 212 and transmitting through the reaction vessel 207.

The A/D converter 215 is an equipment that converts a detection signal at the spectroscopic detection system 213, which outputs the detection signal after conversion to the computer 216.

The cleaning device 214 is an equipment that cleans the reaction vessel 207 after use in the analysis to be used again.

The computer 216 is a portion that controls an operation of each component in the analysis unit 201 and also calculates a physical property of the sample to be analyzed, such as an absorbance, on the basis of the detection signal after conversion from the A/D converter 215.

The operation unit 202 operates the analysis unit 201 and is connected to the analysis unit 201 via an external interface 224. The operation unit 202 includes a control device 219, an input device 220, a storage device 221, a display device 222, and a printing device 223.

The control device 219 controls an overall operation of the automatic analyzer 200 including the operation unit 202.

The input device 220 is an equipment that inputs various instructions and information, such as a keyboard, a mouse, and the like.

The storage device 221 is configured by a storage medium such as a hard disk that stores therein a program, various data such as a set value, and the like.

The display device 222 is an equipment that displays an operation screen and the like, such as a liquid crystal display.

Described above is an overall configuration of the automatic analyzer 200.

Analytic processing of the sample by the automatic analyzer 200 as described above is generally performed in the following order.

First, the rack 204 is installed in a carrying unit or the like, and carried to a sampling position of the analysis unit 201 by the rack transfer unit 218.

When the rack 204 arrives at the sampling position, the sample is fractionated by the sample dispensing probe 209 to the reaction vessel 207 of the reaction disc 208. The sample is fractionated by the sample dispensing probe 209 as many times as required depending on an analysis item requested for the sample.

Moreover, the reagent to be used for the analysis is fractionated by the reagent dispensing probe 210 from the reagent bottle 205 on the reagent disc 206 to the reaction vessel 207 into which the sample has already been fractionated. Subsequently, the stirring device 211 stirs the reaction liquid 244 prepared by mixing the sample and the reagent in the reaction vessel 207.

The light generated from the white light source 212 is then transmitted through the reaction vessel 207 containing the reaction liquid 244 after stirring, and luminosity of the transmitted light is measured by the spectroscopic detection system 213. The luminosity measured by the spectroscopic detection system 213 is sent to the computer 216 via the A/D converter 215 and the internal interface 217. Subsequently, the computer 216 performs an arithmetic operation, calculates a concentration of a predetermined component in the liquid sample such as blood or urine, displays the result on the display device 222 or the like, stores the result in the storage device 221, and so on.

Next, a schematic configuration of the spectrophotometer in the automatic analyzer 200 according to the present embodiment is described with reference to Fig. 2. Fig. 2 is a schematic diagram of the spectrophotometer according to the present embodiment.

As illustrated in Fig. 2, a spectrophotometer 300 according to the present embodiment is an equipment that irradiates the reaction vessel 207 with light and detects light coming out of the reaction liquid 244 held in the reaction vessel 207, and includes the white light source 212, condenser lenses 242a, 242b, a slit 245, a concave diffraction grating 246, and a multi-wavelength detector 248.

In the spectrophotometer 300, the multi-wavelength detector 248 is connected to the A/D converter 215.

In the spectrophotometer 300, the light from the white light source 212 is collected by the condenser lens 242a and falls on the reaction liquid 244 contained in the reaction vessel 207. The light transmitting through the reaction liquid 244 is collected by the condenser lens 242b onto the opening of the slit 245. The light having passed through the slit 245 is wavelength-dispersed by the concave diffraction grating 246 to form a spectrum. The formed spectrum is detected by the multi-wavelength detector 248.

The multi-wavelength detector 248 has, as illustrated in Fig. 2, a plurality of photodetection elements 304 that detect the light split by the concave diffraction grating 246, a curved substrate 301, a flexible wiring substrate 303, and a photodetection element mask 306.

The curved substrate 301 is made of a material having the same linear expansion coefficient as that of the main substrate constituting the concave diffraction grating 246, and preferably constituted by the same material as that of the main substrate of the concave diffraction grating 246, especially.

Of the two main surfaces of the curved substrate 301, one to which the flexible wiring substrate 303 is fixed is curved. This curved surface is curved so that an image position of each wavelength of the concave diffraction grating 246 calculated in advance is equal to a position at which the photodetection element 304 is fixed. This allows the flexible wiring substrate 303 for fixing the photodetection element 304 and the photodetection element mask 306 to be curved along the curved substrate 301, thereby making it easy to arrange the photodetection element 304 at the image position.

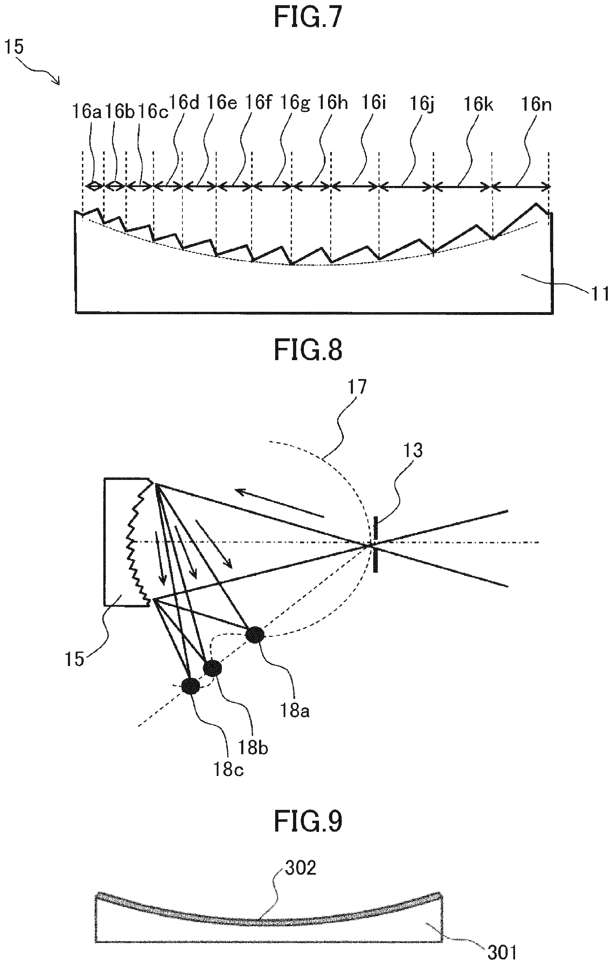

The flexible wiring substrate 303 is a flexible substrate having flexibility allowing for elastic deformation and fixed on the curved substrate 301 by a first adhesive layer 302 (see Fig. 9). The flexible wiring substrate 303 has a plurality of photodetection elements 304 arranged thereon and wiring formed thereon for outputting a detection signal of each photodetection element 304 to the A/D converter 215.

In the multi-wavelength detector 248 according to the present embodiment, each of the plurality of photodetection elements 304 included in the multi-wavelength detector 248 is arranged at the image position of the concave diffraction grating 246, and preferably each of the photodetection elements 304 is arranged at the image position so as to detect all of the split light.

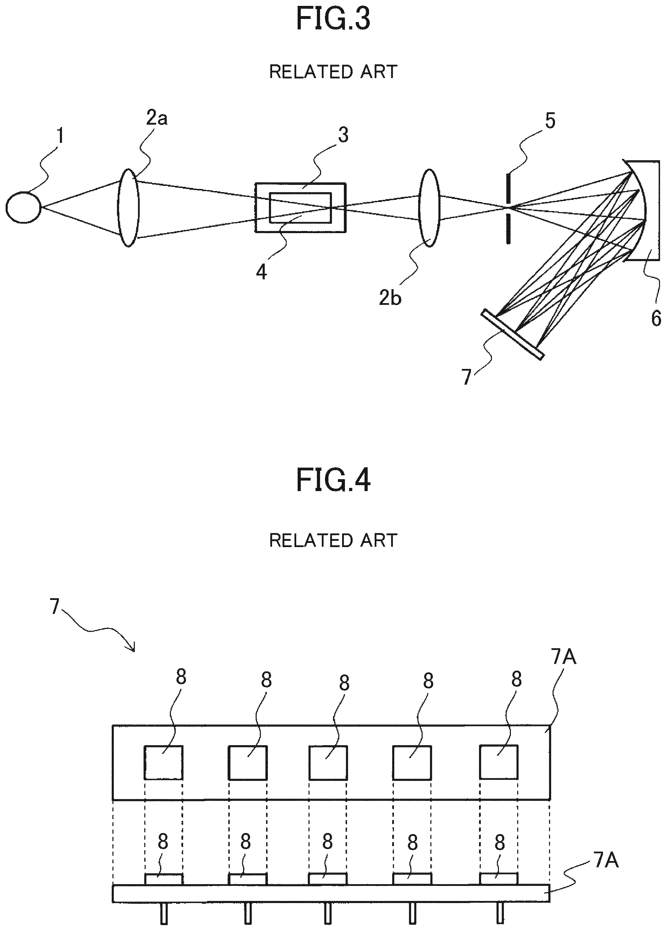

The spectrometer such as the automatic analyzer often uses the concave diffraction grating, and conventionally the spectrometer mainly has such a configuration as illustrated in Fig. 3.

In the conventional spectrophotometer illustrated in Fig. 3, the light from a white light source 2 is collected by a condenser lens 2a and falls on a sample 4 contained in a reaction vessel 3. The light transmitted from the sample is collected by a condenser lens 2b onto an opening of a slit 5. The light having passed through the slit 5 is wavelength-dispersed by a concave diffraction grating 6 to form a spectrum. The formed spectrum is detected by a multi-wavelength detector 7. In general, a detector including a plurality of photodetection elements 8 arranged on a substrate 7A in a straight line as illustrated in Fig. 4 is used as the multi-wavelength detector 7.

It is known here that the image position of the concave diffraction grating is determined by the radius of curvature of the curved substrate and the period of the engraved grooves.

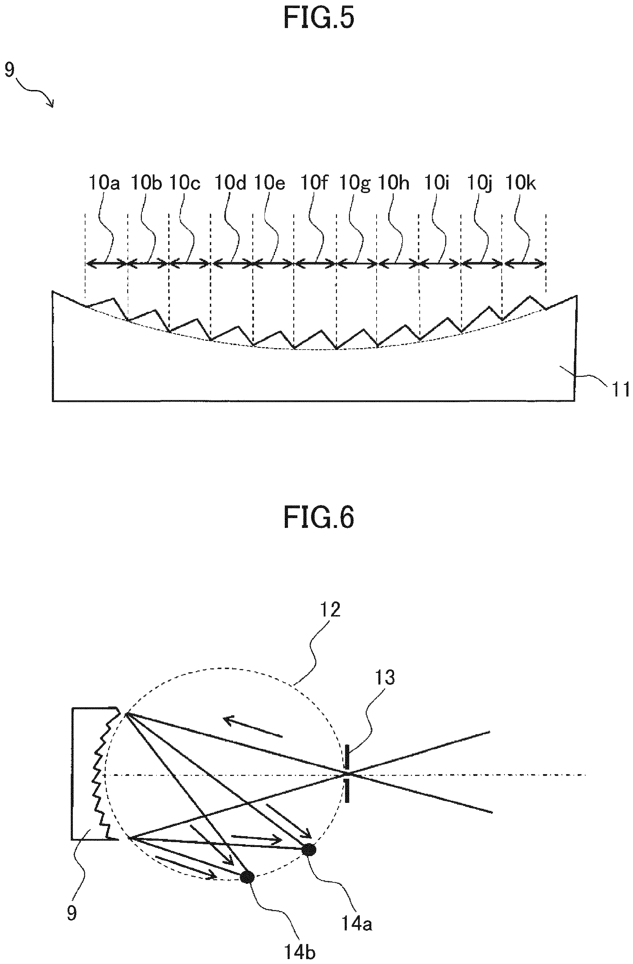

With reference to Figs. 5 and 6, the concave diffraction grating having regular groove periods and its image position are described. Fig. 5 illustrates a cross section of the concave diffraction grating having regular groove periods, and Fig. 6 illustrates the image position of the concave diffraction grating illustrated in Fig. 5.

In the concave diffraction grating as illustrated in Fig. 5, the grooves are engraved so that all engraved groove periods 10a-10k are equal with respect to a chord of a curved substrate 11.

In a case of using the concave diffraction grating for the purpose of spectroscopy, it is customary to project divergent light from a special location to the concave diffraction grating.

By way of example, as illustrated in Fig. 6, a slit 13 is provided on a Rowland circle having a diameter equal to a radius of curvature of the concave diffraction grating. As a result, when divergent light is projected onto the slit 13, image points 14a, 14b are also located on the Rowland circle.

However, with the multi-wavelength detector 7 as illustrated in Fig. 5, because the photodetection elements are arranged in a straight line, it is not possible to use the concave diffraction grating having regular groove periods.

Next, with reference to Figs 7 and 8, the concave diffraction grating having irregular groove periods and its image position are described. Fig. 7 illustrates a cross section of the concave diffraction grating having irregular groove periods, and Fig. 8 illustrate the image position of the concave diffraction grating illustrated in Fig. 7.

In the concave diffraction grating as illustrated in Fig. 7, the grooves are engraved so that periods 16a-16n of engraved grooves are different with respect to the chord of the curved substrate 11.

As illustrated in Fig. 8, the slit 13 is provided on the Rowland circle having the diameter equal to a concave diffraction grating 15. For the image position of the concave diffraction grating as illustrated in Fig. 7, when divergent light is projected onto the slit 13, image points 18a-18c are located on a lemniscate 17 (lemniscate) passing through the center of curvature of the concave diffraction grating.

Now, according to the present embodiment, in a case where the groove periods of the grooves provided on the surface of the concave diffraction grating 246 are regular, the plurality of photodetection elements 304 are arranged on the Rowland circle . Moreover, in a case where the groove periods of the grooves provided on the surface of the concave diffraction grating 246 are irregular, the plurality of photodetection elements 304 are arranged on the lemniscate.

Therefore, it is desirable in the present embodiment that a glass substrate is used as the curved substrate 301, the glass substrate being bent so that the position of the photodetection element 304 in a state where the flexible wiring substrate 303 and the photodetection element mask 306 are fixed to the curved substrate 301 is coincident with the image position of each wavelength of the concave diffraction grating 246 calculated in advance. For machining the curved substrate, for example, machine processing using a precision processing machine is used.

As the flexible wiring substrate 303, it is desirable to use a flexible substrate including a base material such as plastic or polyimide and wiring formed thereon.

As an adhesive material 305 for fixing the photodetection element 304, for example, it is desirable to use a conductive material such as solder, anisotropic conductive film, and the like.

As the first adhesive layer 302 for bonding the flexible wiring substrate 303 and the curved substrate 301 as well as a second adhesive layer 307 for bonding the photodetection element mask 306 and the curved substrate 301, it is desirable to use a material having the same linear expansion coefficient as that of the material used for the adhesive layer of the concave diffraction grating 246.

Next, a method of manufacturing the spectrophotometer according to the present embodiment is described with reference to Figs. 9 to 13. Figs. 9 to 13 present an example of a method of manufacturing the multi-wavelength detector in the spectrophotometer according to the present embodiment.

First, as illustrated in Fig. 9, the first adhesive layer 302 is formed on a curved surface side of the curved substrate 301.

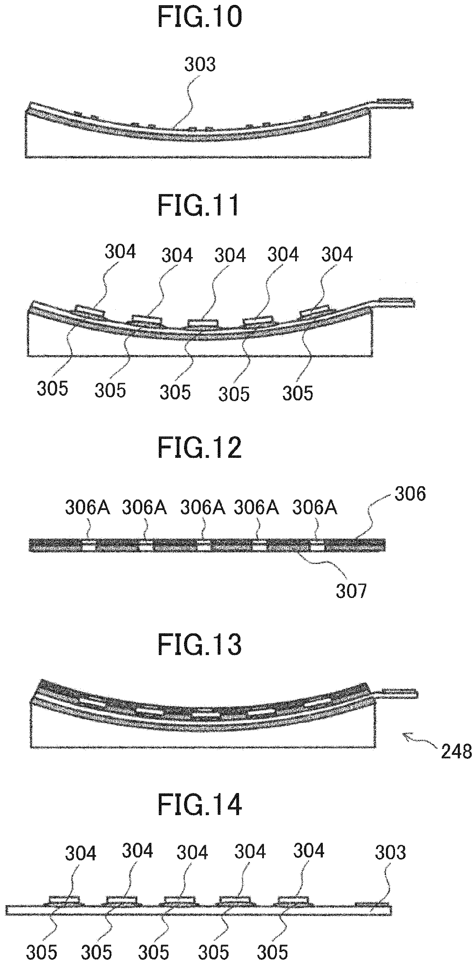

Next, as illustrated in Fig. 10, the flexible wiring substrate 303 with wiring is fixed on the surface of the curved substrate 301 on which the first adhesive layer 302 is formed using the first adhesive layer 302.

After fixing the flexible wiring substrate 303, as illustrated in Fig. 11, the photodetection element 304 is fixed on a surface of the flexible wiring substrate 303 opposite from the side fixed to the curved substrate 301 using the adhesive material 305. At this time, the fixed position of the photodetection element 304 shall be coincident with the image position of each wavelength of the concave diffraction grating 246 calculated in advance.

Next, as illustrated in Fig. 12, the second adhesive layer 307 is formed on a back surface side of the photodetection element mask 306.

Next, as illustrated in Fig. 13, the photodetection element mask 306 and the flexible wiring substrate 303 are fixed using the second adhesive layer 307. In this manner, the multi-wavelength detector 248 is completed.

Each step illustrated in Figs. 9 to 13 is equivalent to the step of arranging each of the plurality of photodetection elements 304 included in the multi-wavelength detector 248 at the image position of the concave diffraction grating 246.

Next, effects of the present embodiment are described.

The automatic analyzer 200 that analyzes the sample according to First Embodiment of the present invention described above includes the plurality of reaction vessels 207 that contain the reaction liquid 244 including the sample and the reagent mixed and reacted therein, and the spectrophotometer 300 that irradiates the reaction vessel 207 with light and detects light coming out of the reaction liquid 244 held in the reaction vessel 207. The spectrophotometer 300 includes the white light source 212, the condenser lenses 242a, 242b that collect light emitted from the white light source 212, the slit 245 that diffracts the light collected by the condenser lenses 242a, 242b, the concave diffraction grating 246 that splits the light having passed through the slit 245, and the multi-wavelength detector 248 having a plurality of photodetection elements 304 that detect the light split by the concave diffraction grating 246, and each of the plurality of photodetection elements 304 included in the multi-wavelength detector 248 is arranged at the image position of the concave diffraction grating 246.

Here, in the detector described in Patent Literature 1 mentioned above, each of the photodetection elements is arranged on a circle. However, according to Patent Literature 1, the photodetection elements are arranged merely on the circle but the photodetection elements are not necessarily arranged at the image position. Therefore, the detection efficiency is not necessarily high, which is a problem.

Moreover, in the detector described in Patent Literature 1, a photoelectric conversion substrate for fixing the photodetection elements is constituted by an Si substrate, a compound semiconductor substrate, or an insulating substrate, which is formed into a curved surface by etching. Here, the method of forming the Si substrate or the like into the curved surface by etching has a disadvantage of low yield rate due to a risk of damaging during the process.

In contrast, according to the present First Embodiment, because the photodetection elements 304 are arranged intentionally at the image position, the image position of the concave diffraction grating 246 and the fixed position of the photodetection element 304 are aligned with high accuracy, allowing for reliably increasing the detection efficiency compared to the related art spectrophotometer. This allows for reducing an effect by aberration, thereby improving a signal-to-noise ratio making it possible to provide a spectrometer with high precision of analysis.

Moreover, it is made possible to align the image position with the position of the photodetection element 304 regardless of the type of the concave diffraction grating 246.

Furthermore, in the present embodiment, because the curved substrate used for the spectrophotometer is preferably made of glass with very high workability, it is applicable to the spectrometer of various sizes.

Moreover, because the multi-wavelength detector 248 further includes the curved substrate 301 made of the material having the same linear expansion coefficient as the main substrate that constitutes the concave diffraction grating 246, and the flexible wiring substrate 303 fixed on the curved substrate 301 and including the plurality of photodetection elements 304 arranged thereon, it is possible to fix the plurality of photodetection elements 304 to the image position easily and reliably as well as output the detected signal to the A/D converter 215 or the like, thereby more reliably increasing the detection efficiency. There is also an advantage of improving the yield rate.

Furthermore, because the surface on which the flexible wiring substrate 303 is fixed is curved, the curved substrate 301 can fix the photodetection element 304 at the image position of the concave diffraction grating 246 with higher accuracy.

Moreover, because the groove periods of the grooves provided on the surface of the concave diffraction grating 246 are regular and the plurality of photodetection elements 304 are arranged on the Rowland circle, higher accuracy is added to the spectrophotometer that has been widely used.

Furthermore, because the groove periods of the grooves provided on the surface of the concave diffraction grating 246 are irregular and the plurality of photodetection elements 304 are arranged on the lemniscate, it is possible to increase the range of the photometric wavelength.

Moreover, because the material of the first adhesive layer 302 that bonds the flexible wiring substrate 303 and the curved substrate 301 in the multi-wavelength detector 248 and the material of the adhesive layer used for the concave diffraction grating 246 have the same linear expansion coefficient, it is possible to prevent the image position from shifting due to temperature change, thereby achieving detection with higher accuracy.

Furthermore, because the curved substrate 301 is made of the same material as that of the main substrate of the concave diffraction grating 246, it is also possible to prevent the image position from shifting due to temperature change, thereby achieving detection with higher accuracy.

Moreover, because each of the photodetection elements 304 is arranged at the image position so as to detect all the split light, it is possible to increase the detection sensitivity more reliably.

It is to be noted that, in a case where the photodetection element mask 306 is used in the multi-wavelength detector 248 of the present embodiment, an opening 306A of the photodetection element mask 306 is also arranged at the image position.

### <Second Embodiment>

A spectrophotometer, a spectrometer, and a method of manufacturing the spectrophotometer according to Second Embodiment of the present invention are described with reference to Figs. 14 to 18. Like reference numerals are used for the same components as in First Embodiment, and description thereof is omitted. The same shall apply to the following embodiments.

Configurations of the spectrophotometer of the present embodiment and the automatic analyzer including the same and an analysis operation of the sample are substantially the same configuration/operation as with the spectrophotometer, the spectrometer, and the method of manufacturing the spectrophotometer, and description thereof is omitted.

In the following, the method of manufacturing the spectrophotometer according to the present embodiment is described with reference to Figs. 14 to 18. Figs. 14 to 18 are figures illustrating an example of the method of manufacturing the multi-wavelength detector in the spectrophotometer according to the present embodiment.

First, as illustrated in Fig. 14, the photodetection element 304 is fixed with respect to the flexible wiring substrate 303 using the adhesive material 305. At this time, the fixed position of the photodetection element 304 shall be coincident with the image position of each wavelength of the concave diffraction grating 246 calculated in advance.

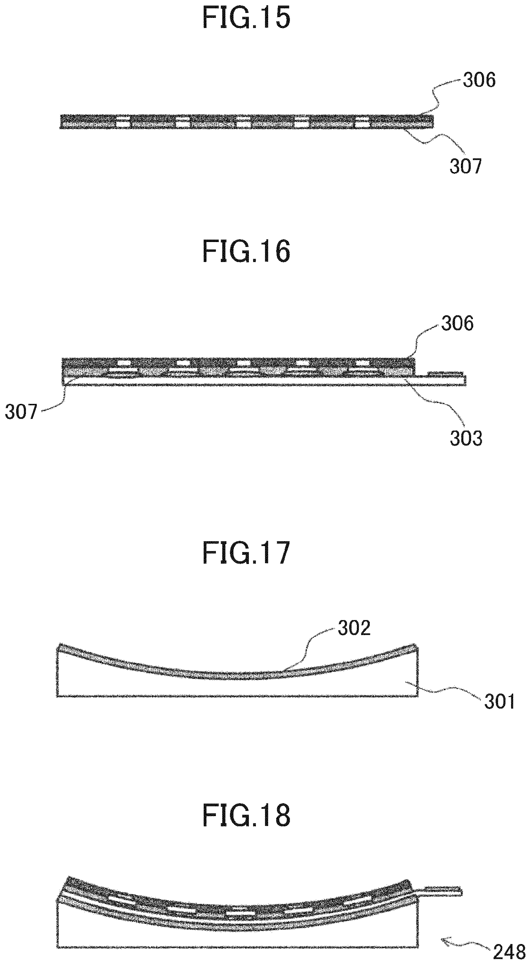

Next, as illustrated in Fig. 15, the second adhesive layer 307 is formed on the back surface side of the photodetection element mask 306.

Next, as illustrated in Fig. 16, the flexible wiring substrate 303 and the back surface side of the photodetection element mask 306 are fixed using the second adhesive layer 307.

Next, as illustrated in Fig. 17, the first adhesive layer 302 is formed on the curved surface side of the curved substrate 301.

Next, as illustrated in Fig. 18, the curved substrate 301 and the flexible wiring substrate 303 are fixed using the first adhesive layer 302. In this manner, the multi-wavelength detector 248 is completed.

Each step illustrated in Figs. 14 to 18 corresponds to the step of arranging each of the plurality of photodetection elements 304 included in the multi-wavelength detector 248 at the image position of the concave diffraction grating 246.

It is to be noted that, in the present embodiment, the step illustrated in Fig. 17 may be performed in parallel with the steps of Figs. 14 to 16, or may be performed before or between the steps of Figs. 14 to 16.

The spectrophotometer, the spectrometer, and the method of manufacturing the spectrophotometer according to Second Embodiment of the present invention provide substantially the same effects as with the spectrophotometer, the spectrometer, and the method of manufacturing the spectrophotometer according to First Embodiment described above.

Moreover, in the present Second Embodiment, as illustrated in Fig. 16, the flexible wiring substrate 303 and the photodetection element mask 306 are fixed in a flat state, and subsequently fixed to the curved substrate as illustrated in Fig. 18. This facilitates alignment of the flexible wiring substrate 303 and the photodetection element mask 306 compared to First Embodiment, which provides an effect of reducing production cost compared to First Embodiment.

### <Third Embodiment>

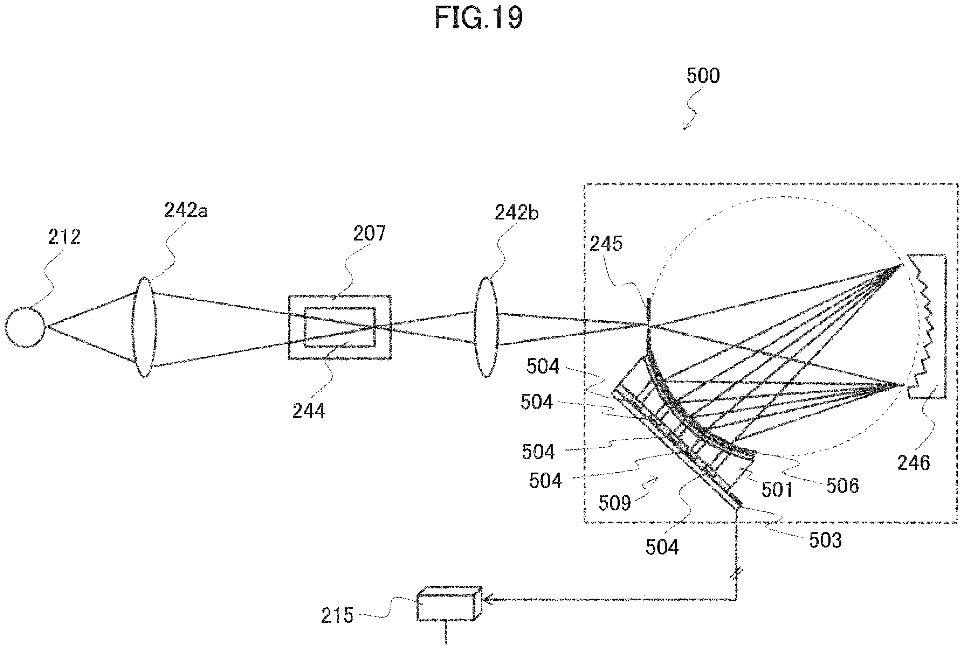

A spectrophotometer, a spectrometer, and a method of manufacturing the spectrophotometer according to Third Embodiment are described with reference to Figs. 19 to 24.

First, a schematic configuration of the spectrophotometer of the present embodiment is described with reference to Fig. 19. Fig. 19 is a schematic diagram of the spectrophotometer of the present embodiment.

As illustrated in Fig. 19, a spectrophotometer 500 of the present embodiment is an equipment that irradiates the reaction vessel 207 with light and detects light coming out of the reaction liquid 244 held in the reaction vessel 207, and includes the white light source 212, the condenser lenses 242a, 242b, the slit 245, the concave diffraction grating 246, and a multi-wavelength detector 509.

The multi-wavelength detector 509 includes a plurality of photodetection elements 504, a photodetection element mask fixing substrate 501, a wiring substrate 503, and a photodetection element mask 506.

The photodetection element mask fixing substrate 501 made of the material having the same linear expansion coefficient as the main substrate that constitutes the concave diffraction grating 246, and the surface on which the photodetection element mask 506 is mounted is curved. The photodetection element mask fixing substrate 501 is desirably constituted by the same material as the main substrate of the concave diffraction grating 246.

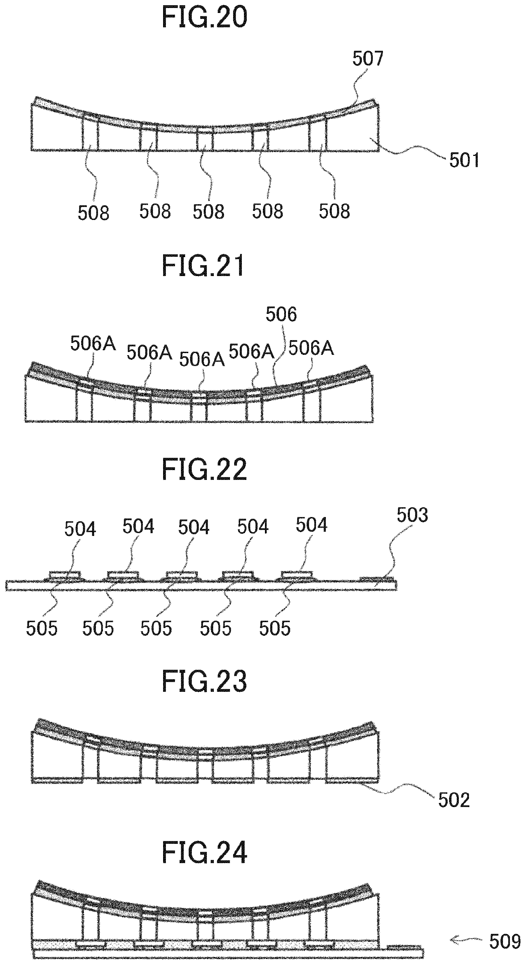

The photodetection element mask fixing substrate 501 is provided with through holes 508 as illustrated in Fig. 20. Each of the through holes 508 is formed at a position coincident with a position of an opening 506A when the photodetection element mask 506 is fixed and coincident with a position of a photodetection element 504 when the wiring substrate 503 is fixed. The through hole 508 achieves a configuration that prevents loss of light intensity by the photodetection element mask fixing substrate 501.

The wiring substrate 503 is fixed on a surface side opposite from the curved surface of the photodetection element mask fixing substrate 501, and the plurality of photodetection elements 504 are arranged on a plane. Moreover, there is formed wiring to output the detection signal from each photodetection element 504 to the A/D converter 215.

In the multi-wavelength detector 509 according to the present embodiment, each of the openings 506A of the photodetection element mask 506 included in the multi-wavelength detector 509 is arranged at the image position of the concave diffraction grating 246.

For example, in a case where the groove periods of the grooves provided on the surface of the concave diffraction grating 246 are regular, the openings 506A of the photodetection element mask 506 are arranged on the Rowland circle. Moreover, in a case where the groove periods of the grooves provided on the surface of the concave diffraction grating 246 are irregular, the openings 506A of the photodetection element mask 506 are arranged on the lemniscate.

The method of manufacturing the multi-wavelength detector 509 in the spectrophotometer of the present Third Embodiment is described with reference to Figs. 20 to 24. Figs. 20 to 24 are figures illustrating an example of the method of manufacturing the multi-wavelength detector in the spectrophotometer according to the present embodiment.

First, as illustrated in Fig. 20, a first adhesive layer 507 is formed on the curved surface side of the photodetection element mask fixing substrate 501.

In the present embodiment, a curved substrate is used as the photodetection element mask fixing substrate 501 illustrated in Fig. 20, the curved substrate being bent so that, in a state where the photodetection element mask 506 is fixed, the image position of each wavelength of the concave diffraction grating 246 is coincident with the position of the opening 506A of the photodetection element mask 506. Moreover, a substrate is used in which the through hole 508 of the photodetection element mask fixing substrate 501 is formed to be coincident with the position of the opening 506A of the photodetection element mask 506.

Next, as illustrated in Fig. 21, the photodetection element mask 506 is fixed on the surface of the photodetection element mask fixing substrate 501 on the first adhesive layer 507 side using the first adhesive layer 507.

The present Third Embodiment is different from First Embodiment and Second Embodiment in that the photodetection element mask 506 is mounted on the curved surface of the photodetection element mask fixing substrate 501 and the photodetection elements 504 are arranged on the plane of the wiring substrate 503. However, because the openings 506A of the photodetection element mask 506 are disposed at the image position of each wavelength of the concave diffraction grating, it is possible to have the similar effects to those of First Embodiment and Second Embodiment.

Next, as illustrated in Fig. 22, the photodetection elements 504 are fixed to the wiring substrate 503 using an adhesive material 505. At this time, the fixing is performed so that the photodetection elements 504 are coincident with the positions of the through holes 508 disposed in the photodetection element mask fixing substrate 501.

Next, as illustrated in Fig. 23, a second adhesive layer 502 is formed on the surface of the photodetection element mask fixing substrate 501 opposite from the side on which the photodetection element mask 506 is fixed.

Next, as illustrated in Fig. 24, the photodetection element mask fixing substrate 501 and the wiring substrate 503 are fixed using the second adhesive layer 502.

Each step illustrated in Figs. 20 to 24 is equivalent to the step of arranging each of the openings 506A of the photodetection element mask 506 to be arranged on the surface of the multi-wavelength detector 509 at the image position of the concave diffraction grating 246.

The wiring substrate 503 illustrated in Fig. 24 may have any configuration that includes wiring, and it is possible to use the flexible substrate (flexible wiring substrate) used in Embodiments 1, 2 and a hard (rigid) substrate using cured composite, glass, epoxy, or the like as the base material.

The configuration of the spectrophotometer 500 is substantially the same as that of the spectrophotometer 300 of First Embodiment except for the multi-wavelength detector 509, and the configuration/operation of the automatic analyzer is substantially the same as that of the automatic analyzer 200 of First Embodiment except for the spectrophotometer 500. Therefore, details thereof are omitted.

The spectrophotometer 500 including the white light source 212, the condenser lenses 242a, 242b that collect light emitted from the white light source 212, the slit 245 that diffracts the light collected by the condenser lenses 242a, 242b, the concave diffraction grating 246 that splits the light having passed through the slit 245, and the multi-wavelength detector 509 having a plurality of photodetection elements 504b that detect the light split by the concave diffraction grating 246, in which each of the openings 506A of the photodetection element mask 506 to be arranged on the surface of the multi-wavelength detector 509 is arranged at the image position of the concave diffraction grating 246 according to Third Embodiment of the present invention, as well as an automatic analyzer including the spectrophotometer 500, provide substantially the same effect as with the spectrophotometer 300 and the automatic analyzer 200 of First Embodiment described above.

### <Others>

It is to be noted that the present invention is not limited to the above-described embodiments but encompasses various modifications. The above-described embodiments are intended for detailed description of the present invention for better understanding but not necessarily limiting to those including all the described configurations.

Moreover, it is possible to replace a portion of a configuration of one embodiment with a configuration of another embodiment, and to add a configuration of one embodiment to a configuration of another embodiment. It is also possible to add another configuration to, delete, or replace a portion of a configuration of each embodiment.

### List of Reference Signs

- 200:: Automatic analyzer
- 201:: Analysis unit
- 202:: Operation unit
- 203:: Sample vessel
- 204:: Rack
- 205:: Reagent bottle
- 206:: Reagent disc
- 207:: Reaction vessel
- 208:: Reaction disc
- 209:: Sample dispensing probe
- 210:: Reagent dispensing probe
- 211:: Stirring device
- 212:: White light source
- 213:: Spectroscopic detection system
- 214:: Cleaning device
- 215:: A/D converter
- 216:: Computer
- 217:: Internal interface
- 218:: Rack transfer unit
- 219:: Control device
- 220:: Input device
- 221:: Storage device
- 222:: Display device
- 223:: Printing device
- 224:: External interface
- 242a,: 242b: Condenser lens
- 244:: Reaction liquid
- 245:: Slit
- 246:: Concave diffraction grating
- 248, 509:: Multi-wavelength detector
- 300, 500:: Spectrophotometer
- 301:: Curved substrate
- 302:: First adhesive layer
- 303:: Flexible wiring substrate
- 304, 504:: Photodetection element
- 305, 505:: Adhesive material
- 306, 506:: Photodetection element mask
- 306a, 506a:: Opening
- 307:: Second adhesive layer
- 501:: Photodetection element mask fixing substrate
- 502:: Second adhesive layer
- 503:: Wiring substrate
- 507:: First adhesive layer
- 508:: Through hole

## Claims

1. A spectrophotometer, comprising:
a light source;
a condenser lens that collects light emitted from the light source;
a slit that diffracts the light collected by the condenser lens;
a concave diffraction grating that splits the light passing through the slit; and
a multi-wavelength detector having a plurality of photodetection elements that detect the light split by the concave diffraction grating,
wherein each of the plurality of photodetection elements included in the multi-wavelength detector is arranged at an image position of the concave diffraction grating.

2. The spectrophotometer according to claim 1,
wherein the multi-wavelength detector further comprises a substrate made of a material having the same linear expansion coefficient as that of a main substrate constituting the concave diffraction grating and a flexible wiring substrate having the plurality of photodetection elements arranged thereon.

3. The spectrophotometer according to claim 2,
wherein a surface of the substrate on which the flexible wiring substrate 303 is fixed is curved.

4. The spectrophotometer according to claim 3,
wherein groove periods of grooves provided on the surface of the concave diffraction grating are regular, and
wherein the plurality of photodetection elements are arranged on a Rowland circle.

5. The spectrophotometer according to claim 3,
wherein groove periods of grooves provided on the surface of the concave diffraction grating are irregular, and
wherein the plurality of photodetection elements are arranged on a lemniscate.

6. The spectrophotometer according to claim 2,
wherein a material of adhesive layer that bonds the flexible wiring substrate and the substrate in the multi-wavelength detector and a material of an adhesive layer used for the concave diffraction grating have the same linear expansion coefficient.

7. The spectrophotometer according to claim 2,
wherein the substrate is made of the same material as that of the main substrate of the concave diffraction grating.

8. The spectrophotometer according to claim 1,
wherein each of the photodetection elements 304 is arranged at an image position so as to detect all the split light.

9. A spectrophotometer, comprising:
a light source;
a condenser lens that collects light emitted from the light source;
a slit that diffracts the light collected by the condenser lens;
a concave diffraction grating that splits the light passing through the slit; and
a multi-wavelength detector having a plurality of photodetection elements that detect the light split by the concave diffraction grating,
wherein each opening of the photodetection element mask to be arranged on the surface of the multi-wavelength detector is arranged at an image position of the concave diffraction grating.

10. The spectrophotometer according to claim 9,
wherein the photodetection element mask is mounted on a substrate having a curved surface, and the plurality of photodetection elements are arranged on a surface side opposite from the curved surface of the substrate.

11. The spectrophotometer according to claim 10,
wherein groove periods of grooves provided on the surface of the concave diffraction grating are regular, and
wherein the opening is arranged on a Rowland circle.

12. The spectrophotometer according to claim 10,
groove periods of grooves provided on the surface of the concave diffraction grating are irregular, and
wherein the opening is arranged on a lemniscate.

13. The spectrophotometer according to claim 10,
wherein the plurality of photodetection elements are arranged on a plane.

14. A spectrometer that analyzes a sample, comprising:
a plurality of reaction vessels that contain reaction liquid including the sample and reagent mixed and reacted therein; and
the spectrophotometer according to claim 1 or 9 that irradiates the reaction vessel with light and detects light coming out of the reaction liquid held in the reaction vessel.

15. A method of manufacturing a spectrophotometer comprising: a light source; a condenser lens that collects light emitted from the light source; a slit that diffracts the light collected by the condenser lens; a concave diffraction grating that splits the light passing through the slit; and a multi-wavelength detector having a plurality of photodetection elements that detect the light split by the concave diffraction grating, the method comprising:
arranging each opening of a photodetection element mask to be arranged on a surface of the multi-wavelength detector at an image position of the concave diffraction grating.
